(19) Europäisches Patentamt
European Patent Office
Office européen des brevets

(11) Publication number: **0 544 265 B1**

(12) # EUROPEAN PATENT SPECIFICATION

(45) Date of publication of patent specification: **02.11.95**

(51) Int. Cl.[6]: **C08L 27/16**, C08L 83/08, C08G 81/02, //(C08L27/16, 83:08),(C08L83/08,27:16)

(21) Application number: **92120112.5**

(22) Date of filing: **25.11.92**

(54) **Vulcanizable fluororubber composition and process for its production.**

(30) Priority: **27.11.91 JP 337588/91**

(43) Date of publication of application:
**02.06.93 Bulletin 93/22**

(45) Publication of the grant of the patent:
**02.11.95 Bulletin 95/44**

(84) Designated Contracting States:
**DE FR GB IT**

(56) References cited:
**EP-A- 0 338 393**
**EP-A- 0 485 906**
**DE-A- 2 519 964**

(73) Proprietor: **ASAHI GLASS COMPANY LTD.**
**1-2, Marunouchi 2-chome**
**Chiyoda-ku**
**Tokyo 100 (JP)**

(72) Inventor: **Kamiya, Hiroki, Asahi Glass Company Ltd.**
**Tamagawa Bunshitsu,**
**3-474-2, Tsukagoshi,**
**Saiwai-ku**
**Kawasaki-shi,**
**Kanagawa-ken (JP)**
Inventor: **Kaneko, Isamu, Asahi Glass Company Ltd.**
**Chuo Kenkyusho,**
**1150, Hazawa-cho,**
**Kanagawa-ku**
**Yokohama-shi,**
**Kanagawa-ken (JP)**

(74) Representative: **Wächtershäuser, Günter, Prof. Dr.**
**Patentanwalt,**
**Tal 29**
**D-80331 München (DE)**

EP 0 544 265 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a vulcanizable fluororubber composition and a process for its production.

Fluororubber is a rubber material provided with heat resistance, oil resistance and weather resistance most excellently and has been effectively used as rubber parts for automobiles, such as oil seals, O-rings and fuel hoses. On the other hand, it has a drawback that it is inferior in the low temperature flexibility.

To solve this problem, various studies have been made on a composition having a silicone rubber excellent in the low temperature characteristics incorporated. By their natures, the fluororubber and silicone rubber have poor affinity to each other, and it has been difficult to obtain a uniform mixture excellent in the processability by mixing them. Nevertheless, in Japanese Unexamined Patent Publications No. 103636/1989 and No. 198646/1989, it is proposed to improve the processability by dispersing the silicone rubber in the form of fine particles by vulcanizing only the silicone rubber at the time of kneading the fluororubber and the silicone rubber.

However, with a blend of such materials which are essentially poor in co-vulcanizability, the physical properties obtainable by the vulcanization are still inadequate. Although the respective rubber properties are excellent, it has not yet been possible to satisfactory take out and combine such excellent properties of the two.

DE-A-25 19 964 describes a vulcanized rubber composition consisting of (a) a fluorine-containing ethylene copolymer and (b) a silicone rubber and/or fluorine-containing copolymer. An organic peroxide is used as a vulcanizing agent. The composition does not form an interpenetrating network structure.

EP-A-0 338 393 describes surface-segregatable, melt-extrudable thermoplastic compositions suitable for processing by melt extrusion to form a fiber or film having a differential, increasing concentration of an additive from the center of the fiber or film to the surface thereof. There is no description of an interpenetrating network structure being formed between the thermoplastic polymer and the additive.

The present invention has been made with the background of the above-mentioned technical problems of the prior art, and it is an object of the present invention to improve the microscopic dispersibility of fluororubber and silicone by vulcanizing and dispersing the silicone in the fluororubber while chemically bonding the fluororubber and the silicone to form an interpenetrating network structure and to provide a non-vulcanized rubber composition excellent in the processability and free from phase separation and to provide a vulcanizable fluororubber composition excellent in the mechanical strength, heat resistance, cold resistance, oil resistance and weather resistance.

Thus, the present invention has been made to solve the above problems and provides a vulcanizable fluororubber composition comprising (A) a fluororubber having vinylidene fluoride units and being substantially not vulcanizable by peroxides and (B) an organopolysiloxane having a crosslinked structure formed by an organic peroxide and having amino groups, which form an interpenetrating network structure, wherein at least a part of the fluororubber (A) is chemically bonded to the polysiloxane (B) by a chemical bond between the vinylidene flouride units of the fluororubber (A) and the amino groups of the organopolysiloxane (B), and the fluororubber (A) is from 99.5 to 50 parts by weight and the organopolysiloxane (B) is from 0.5 to 50 parts by weight, based on 100 parts by weight of the total of the fluororubber (A) and the organopolysiloxane (B).

The present invention also provides a process for producing a vulcanizable fluororubber composition, which comprises reacting (A) a fluororubber having vinylidene fluoride units and being substantially not vulcanizable by a peroxide, (B) an organopolysiloxane having amino groups and (C) an organic peroxide at a temperature of at least the decomposition temperature of the organic peroxide (C) while exerting a shear stress.

Now, the present invention will be described in detail with reference to the preferred embodiments.

The fluororubber used as component (A) in the present invention is required to have vinylidene fluoride units. These units react with amino groups of component (B) to chemically bond the fluororubber of component (A) to the organopolysiloxane of component (B). Such units are contained preferably in an amount of at least 10 mol% based on the total constituting units of the fluororubber of component (A). Specifically, it may be a copolymer prepared by copolymerizing vinylidene fluoride with at least one fluorine-containing monomer, or a copolymer obtained by copolymerizing vinylidene fluoride with at least one fluorine-cotaining monomer and a monomer containing no fluorine.

Such at least one fluorine-containing monomer may, for example, be hexafluoropropene, 1,1,1,2,3-pentafluoropropene, 3,3,3-trifluoropropene, tetrafluroethylene, trifluoroethylene, 1,2-difluoroethylene, dichlorodifluoroethylene, chlorotrifluoroethylene, hexafluorobutene, a vinyl fluoride ether, an alkyl fluoride vinyl ether or a perfluoroacrylate. Particularly preferred are hexafluoropropene and tetrafluoroethylene. The

monomer containing no fluorine may, for example, be ethylene, propylene, butene or an alkylvinyl ether. Particularly preferred is propylene.

Specific examples of the fluororubber for component (A) include a vinylidene fluoride-hexafluoropropene copolymer, a vinylidene fluoride-1,1,1,2,3-pentafluoropropene copolymer, a vinylidene fluoride-hexafluoropropene-tetrafluoroethylene copolymer and a vinylidene fluoride-tetrafluoroethylene-propylene copolymer.

Among these fluororubbers, those vulcanizable by polyols or amines and substantially not vulcanizable by peroxides, are preferred. With fluororubbers vulcanizable by peroxides, fluororubbers tend to vulcanize at the same time as the crosslinking of the organopolysiloxane (B), whereby it sometimes becomes difficult to obtain an interpenetrating network structure, such being undesirable. Further, post processability tends to be poor.

Fluororubbers substantially non-vulcanizable by peroxides are fluororubbers having sites vulcanizable by peroxides, such as carbon-carbon double bonds, iodine or bromine, not introduced.

The organopolysiloxane having amino groups used as component (B) in the present invention, is an essential component to improve the cold resistance of component (A). It may, for example, be an organopolysiloxane of the following formula (1), an organosilane of the formula (2) or a pertial hydrolyzate thereof.

$$[H_2N(CH_2CH_2\overset{\overset{\Large H}{|}}{N})_n-R^1-]_a-\overset{\overset{\Large R^2_b}{|}}{S}iO_{(4-a-b)/2} \qquad (1)$$

wherein $R^1$ is a vibalent hydrocarbon group, $R^2$ is a substituted or unsubstituted monovalent hydrocarbon group, n is an integer of from 0 to 4, $0 < a \leqq 3$, $0 \leqq b < 3$, and $0 < a + b \leqq 3$.

$$[H_2N(CH_2CH_2\overset{\overset{\Large H}{|}}{N})_n-R^1-]_c-\overset{\overset{\Large R^2_d}{|}}{S}iX_e \qquad (2)$$

wherein $R^1$, $R^2$ and n are as defined above, X is a hydroxyl group and/or a hydrolyzable group selected from the group consisting of halogen atoms and $C_{1-10}$ alkoxy groups, c is 1, 2 or 3, d is 0, 1 or 2 and e is 1, 2 or 3, provided that $c + d + e = 4$.

Here, the $H_2N(CH_2CH_2NH)_n$-$R^1$- group in component (B) may be the one bonded to a side chain of the silicone or the one bonded to the terminal of the silicone. Component (A) and component (B) are chemically bonded by the reaction of the amino groups in component (B) with the vinylidene fluoride units in component (A), whereby the low temperature characteristics of the fluororubber as component (A) can be improved by component (B) in an amount smaller than the amount required in a case where a simple organopolysiloxane is blended.

When component (A), component (B) and an organic peroxide of component (C) are blended at a temperature of at least the decomposition temperature of component (C), only component (B) will be vulcanized by component (C) and will be uniformly dispersed in component (A) in the form of fine particles (i.e. to form an interpenetrating network structure), whereby a rubber composition having excellent processability can be obtained. To vulcanize and disperse component (B) more effectively, it is preferred to use as component (B) the one having at least one alkenyl group in its molecule.

Specific examples of component (B) include alkoxysilanes of the chemical formulas (3) to (10) and partial hydrolyzates of these alkoxysilanes. They may be used alone or in combination as a mixture of two or more of them.

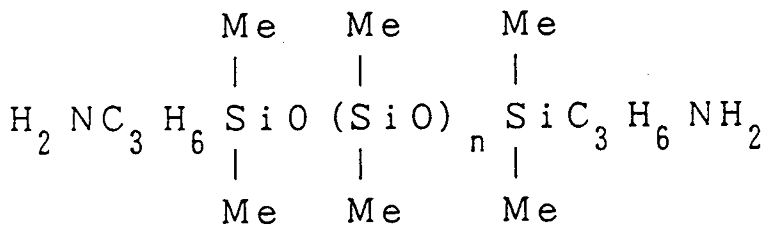 (3)

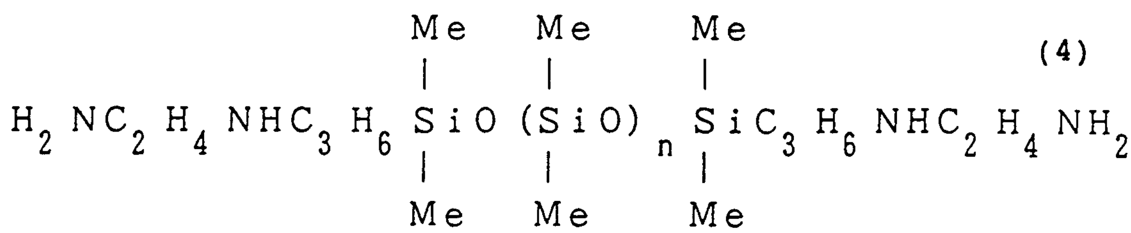 (4)

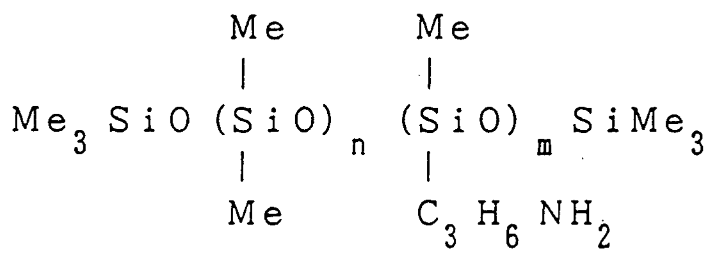 (5)

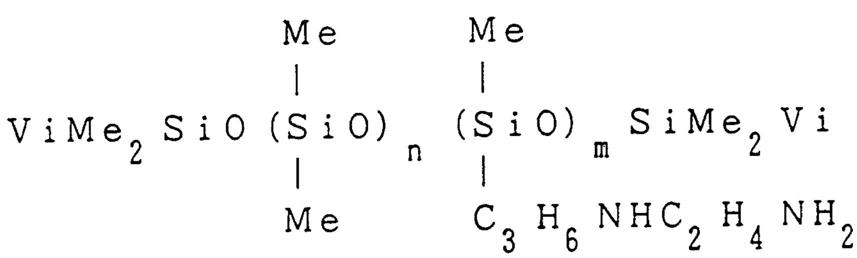 (6)

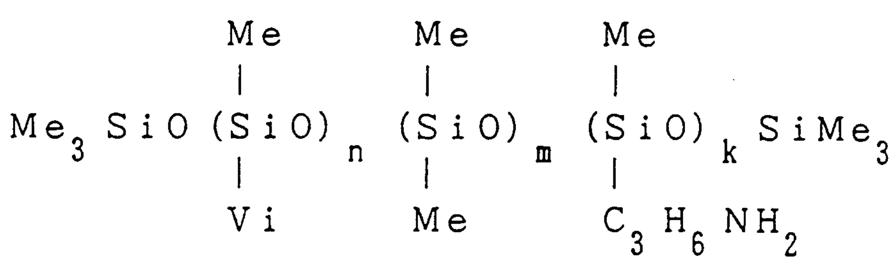 (7)

$H_2NC_2H_4NHC_3H_6Si(OMe)_3$ (8)

$H_2NC_3H_6Si(OEt)_3$ (9)

$H_2NC_2H_4NHC_3H_6SiMe(OMe)_2$ (10)

In the above formulas, Me represents a methyl group, Vi represents a vinyl group, and Et represents an ethyl group.

The amino groups in the organopolysiloxane of component (B) may be primary or secondary amino groups. However, from the viewpoint of the reaction with the fluororubber of component (A), primary amines are preferred. The organopolysiloxane of component (B) may have an optional molecular weight ranging from a liquid having a molecular weight of about 1,000 to a gum having a molecular weight of about 1,000,000.

Further, the organopolysiloxane of component (B) preferably has an amine equivalent of 500 to 100,000. If the amine equivalent is less than this range, the content of amino groups tends to be so large that when reacted with component (A), component (A) tends to be crosslinked, or when component (A) and (B) are kneaded, gelation tends to occur, whereby the processability tends to be poor, and the properties of the vulcanized rubber tend to be poor. If the amine equivalent exceeds 100,000, the reactive sites with the fluororubber tend to be little, and the situation tends to be like a case where a simple organopolysiloxane is mixed, whereby the blend product tends to be poor in compatibility and tends to undergo bleeding out after kneading. The amino groups in component (B) may be in the form of derivatives such as Schiff bases or carbamic acid salts.

The ratio of component (A) to component (B) is within a range of (A)/(B) = 99.5/0.5 to 50/50. If the proportion of component (B) is less than this range, the effects as component (B) tend to be small, and if it exceeds the above range, the properties of component (A) tend to deteriorate.

The organic peroxide used as component (C) in the present invention is to vulcanize and disperse the organopolysiloxane of component (B) as described above, and it may be any organic peroxide so long as it is capable of generating peroxyradicals under the vulcanization condition. For example, it may be 1,1-bis(5-butylperoxy)-3,5,5-trimethylcyclohexane, 2,5-dimethylhexane-2,5-dihydroxy peroxide, di-t-butyl peroxide, 5-butylcumyl peroxide, dicumyl peroxide, $\alpha,\alpha'$-bis(t-butylperoxy)-p-diisopropylbenezene, 2,5-dimethyl-2,5-di(t-butylperoxy)hexane, 2,5-dimethyl-2,5-di(t-butylperoxy)hexyne-3, benzoyl peroxide, 2,4-dichlorobenzoyl peroxide, t-butylperoxybenzene, 2,5-dimethyl-2,5-di(benzoylperoxy)hexane,t-butylperoxymaleic acid, or t-butylperoxyisopropyl carbonate.

The type and the amount of component (C) are usually selected depending upon the decomposition temperature, the amount of active -O-O-, etc. However, it is used usually in an amount of from 0.1 to 10 parts by weight, preferably from 0.5 to 5 parts by weight, based on 100 parts by weight of the total of components (A) and (B).

To the composition of the present invention, a vulcanizing agent may be blended as component (D) in addition to the above components, to obtain a fluororubber composition. The vulcanizing agent of component (D) is to vulcanize component (A) to obtain a vulcanized rubber. For example, it may be a polyhydroxy compound or a polyamine compound. In each case, a compound useful for polyol vulcanization or amine vulcanization can be used, and a vulcanization accelerator such as an organic onium compound may be used in combination.

The polyhydroxy compound is preferably at least one compound selected from the group consisting of polyhydroxy aromatic compounds and fluorine-containing polyhydroxy aliphatic compounds. The polyhydroxy aromatic compounds may, for example, be bisphenol A, bisphenol AF, resorcinol, 1,3,5-trihydroxybenzene, 1,7-dihydroxynaphthalene, 2,7-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane, 4,4-bis(4-hydroxyphenyl)valeric acid, 4,4'-dihydroxydiphenylsulfone, 4,4'-dihydroxydiphenyl ketone, tri(4-hydroxyphenyl)methane, 3,3,5,5-tetrachlorobisphenol A, 3,3,5,5-tetrabromobisphenol A, and 4,4'-dihydroxydiphenyl sulfide. The fluorine-containing polyhydroxy aliphatic compounds may, for example, be the following compounds:

$CF_2(CF_2CH_2OH)_2$
$HOCH_2(CF_2)_4OCF(CF_3)CH_2OH$
$HOCH_2(CF_2)_2OCF(CF3)CH_2OH$
$CF_2(CFHCF_2CH_2OH)_2$
$(CF_2)_3(CFHCF_2CH_2OH)_2$
$(CF_2)_5(CF_2CH_2OH)_2$
$(CF_2)_5(CFHCF_2CH_2OH)_2$

Among these compounds, particularly preferred polyhydroxy compounds are bisphenol AF and hydroquinone, and they may be alkali metal salts or alkaline earth metal salts. These compounds may be used alone or in combination as a mixture of two or more of them. Such a polyhydroxy compound is used usually within a range of from 0.1 to 10 parts by weight, preferably from 0.5 to 5 parts by weight, based on 100 parts by weight of the total of components (A) and (B).

The organic onium compound to be used in combination with the polyhydroxy compound serves as a vulcanization accelerator and is preferably a quaternary ammonium salt or a quaternary phosphonium salt in

view of ready availability. Specific examples of such an organic onium compound include tetramethylammonium chloride, tetraethylammonium chloride, tetrapropylammonium chloride, tetrabutylammonium chloride, tetrabutylammonium bromide, tetrabutylphosphonium chloride, benzyltriphenylphosphonium chloride, benzyltrioctylphosphonium chloride and bis(benzylphenylphosphine)iminium chloride. These organic onium compounds may be used alone or in combination as a mixture of two or more of them. Such an organic onium compound is used usualy within a range of from 0.05 to 10 parts by weight, preferably from 0.1 to 5 parts by weight, based on 100 parts by weight of the total of components (A) and (B).

In the polyol vulcanization, a metal oxide, a metal hydroxide or a mixture thereof is used as an acid-receiving agent. Specifically, magnesium oxide, lead oxide, calcium oxide, zinc oxide, iron oxide, calcium hydroxide, magnesium hydroxide, lithium hydroxide or a mixture of two or more of them, may be employed. Among them, a combination of magnesium oxide and calcium hydroxide is preferably employed. Such a compound is used usually within a range of from 0.5 to 30 parts by weight, preferably from 1 to 20 parts by weight, based on 100 parts by weight of the total of components (A) and (B).

The polyamine compound may, for example, be hexamethylenediamine, N,N'-dicinnamylidenehexamethylenediamine or hexamethylenediamine carbamate, and it is used usually within a range of from 0.3 to 10 parts by weight, preferably from 0.5 to 5 parts by weight, based on 100 parts by weight of the total of components (A) and (B).

In the amine vulcanization, like in the polyol vulcanization, a metal oxide used for the polyol vulcanization, may be used as an acid-receiving agent. Among them, magnesium oxide is preferably used. Such an acid-receiving agent is used usually within a range of from 0.5 to 40 parts by weight, preferably from 1 to 30 parts by weight, based on 100 parts by weight of the total of components (A) and (B).

To the fluororubber composition of the present invention, other components including a filler or a reinforcing agent, such as carbon black, silica, clay, diatomaceous earth, calcium carbonate or barium sulfate, a processing assistant, a plasticizer, an internal releasing agent and a colorant, may be incorporated, as the case requires.

The fluororubber composition of the present invention can be prepared by reacting components (A), (B) and (C) at a temperature of at least the decomposition temperature of component (C) while exerting a shearing force, then cooling the mixture and adding component (D) at a temperature of not higher than the vulcanization temperature of component (A). This operation can be conducted by means of a Banbury mixer, a kneader, a press kneader or a twin roll mill.

The fluororubber composition thus obtained may be vulcanized and molded by a conventional method such as compression molding, injection molding, extrusion molding or calender molding.

The vulcanizable fluororubber composition of the present invention is believed to have excellent processability, low temperature flexibility and vulcanization properties, since the amino group porton in the organopolysiloxane having amino groups is reacted and chemically bonded to the vinylidene fluoride unit portion in the fluororubber, and the organopolysiloxane is dispersed in the fluororubber while being vulcanized by the organic peroxide.

Now, the present invention will be described in further detail with reference to Examples. However, it should be understood that the present invention is by no means restricted by such specific Examples. In the following Examples, "parts" means "parts by weight".

The properties of the vulcanized rubber were measured in accordance with JIS K-6301.

EXAMPLES 1 TO 5

In accordance with the composition shown in Table 1, the fluororubber, the organopolysiloxane having amino groups, the carbon and the organic peroxide were reacted under kneading at 170 °C for 15 minutes by a kneader, and then the mixture was taken out, cooled and then wound on a twin roll, whereupon magnesium oxide, calcium hydroxide, bisphenol AF and the organic onium compound were added to obtain a fluororubber composition. At that time, the rolling efficiency was examined. This fluororubber composition was subjected to press vulcanization at 170 °C for 10 minutes and secondary vulcanization at 230 °C for 24 hours to examine the vulcanization properties. The results are shown in Table 1.

COMPARATIVE EXAMPLES 1 TO 3

The respective fluororubbers used in the preceding Examples were formed into rubber compositions by a twin roll without using the organopolysiloxane and the organic peroxide and without heating, and the rubber compositions were vulcanized by comventional polyol vulcanization. The results are shown in Table 1. The vulcanization conditions were the same as in the preceding Examples.

COMPARATIVE EXAMPLE 4

In accordance with the composition as shown in Table 1, a rubber composition was prepared and vulcanized in the same manner as in Examples 1 to 5. However, for the purpose of comparison, an organopolysiloxane having no amino group was employed. The rolling efficiency and the vulcanisation properties were examined, and the results are shown in Table 1.

COMPARATIVE EXAMPLE 5

In accordance with the composition as shown in Table 1, a rubber composition was preapred and vulcanized in the same manner as Examples 1 to 5. However, for the purpose of comparison, no organic preoxide was employed. The rolling efficiency and the vulcanization properties were examined. The reults are shown in Table 1.

COMPARATIVE EXAMPLE 6

A rubber compositon was prepard and vulcanized in the same manner as in Comparative Example 4 except that no organic peroxide was used. The rolling efficiency and the vulcanization properties were examined. The results are shown in Table 1.

Table 1

| | Examples | | | | | Comparative Examples | | | | | |
|---|---|---|---|---|---|---|---|---|---|---|---|
| | 1 | 2 | 3 | 4 | 5 | 1 | 2 | 3 | 4 | 5 | 6 |
| Fluororubber 1 | 100 | | | 100 | 100 | 100 | | | 100 | 100 | 100 |
| Fluororubber 2 | | 100 | | | | | 100 | | | | |
| Fluororubber 3 | | | 100 | | | | | 100 | | | |
| Organopolysiloxane 1 | 10 | | | | 5 | | | | | 5 | |
| Organopolysiloxane 2 | | 5 | | | | | | | | | |
| Organopolysiloxane 3 | | | 15 | | | | | | | | |
| Organopolysiloxane 4 | | | | 20 | | | | | | | |
| Organopolysiloxane 5 | | | | | | | | | 10 | | 10 |
| MT carbon | 25 | 25 | 25 | 25 | 25 | 25 | 25 | 25 | 25 | 25 | 25 |
| Organic peroxide 1 | 1.5 | 1.5 | 1.5 | 1.5 | | | | | 1.5 | | |
| Organic peroxide 2 | | | | | 1.5 | | | | | | |
| Magnesium oxide | 3 | 3 | 3 | 3 | 3 | 3 | 3 | 3 | 3 | 3 | 3 |
| Calcium hydroxide | 6 | 6 | 6 | 6 | 6 | 6 | 6 | 6 | 6 | 6 | 6 |
| Bisphenol AF | 2 | 2 | 2 | 2 | 2 | 2 | 2 | 2 | 2 | 2 | 2 |
| TPBPCl | 0.8 | 0.8 | | 0.8 | 0.8 | 0.8 | 0.8 | 0.8 | 0.8 | 0.8 | 0.8 |
| TBPCl | | | 1 | | | | | | | | |

Table 1 (continued)

| | Examples | | | | | Comparative Examples | | | | | |
|---|---|---|---|---|---|---|---|---|---|---|---|
| | 1 | 2 | 3 | 4 | 5 | 1 | 2 | 3 | 4 | 5 | 6 |
| Rolling efficiency | ○ | ○ | ○ | ○ | ○ | ○ | ○ | ○ | ○ | △ | × |
| <u>Vulcanization properties</u> | | | | | | | | | | | |
| Hardness | 60 | 64 | 60 | 58 | 65 | 74 | 73 | 75 | 70 | 73 | 74 |
| 100% Modulus (kg·f/cm$^2$) | 45 | 52 | 38 | 35 | 56 | 73 | 70 | 85 | 56 | 70 | 88 |
| Tensile strength (kg·f/cm$^2$) | 125 | 145 | 122 | 111 | 150 | 70 | 162 | 180 | 110 | 165 | 145 |
| Elongation (%) | 260 | 220 | 290 | 230 | 210 | 20 | 220 | 200 | 190 | 210 | 180 |
| <u>Low temperature characteirstics</u> | | | | | | | | | | | |
| TR-10 (°C) | -22 | -23 | -17 | -29 | -19 | -16 | -19 | -7 | -19 | -19 | -13 |
| <u>Volume swelling (%)</u> | | | | | | | | | | | |
| FUEL D (40°C, 70 Hr) | 14 | 10 | 44 | 23 | 9 | 4 | 3 | 30 | 17 | 9 | 19 |

The rolling efficiency in Table 1 was evaluated by the following standards.

○ : The rubber composition was wound on the rolls within 30 seconds and remained to be wound thereon even when the gap between the rolls was widened so that no bank was present.

△ : The rubber composition was wound on the rolls within 30 seconds but released from the rolls when the gap of the rolls was widened so that no bank was present.

X : The rubber composition was hardly wound on the rolls, and the wound rubber composition was

readily released from the roll when the gap of the rolls was widened.

The fluororubbers 1, 2 and 3 used in Examples and Comparative Examples are a copolymer of vinylidene fluoride/hexafluoropropylene = 78/22, a copolymer of vinylidene fluoride/hexafluoropropylene/tetrafluoroethylene = 78/16/6 and a copolymer of vinylidene fluoride/tetrafluoroethylene/propylene = 35/40/25, respectively.

Organopolysiloxanes 1, 2, 3, 4 and 5 are compounds of the formulas (11), (12), (13), (14) and (15), respectively.

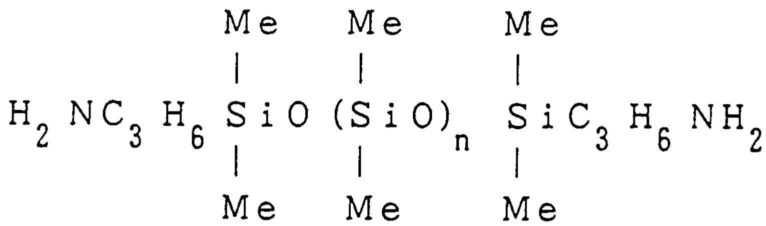

(11)

(amine equivalent: 3,000)

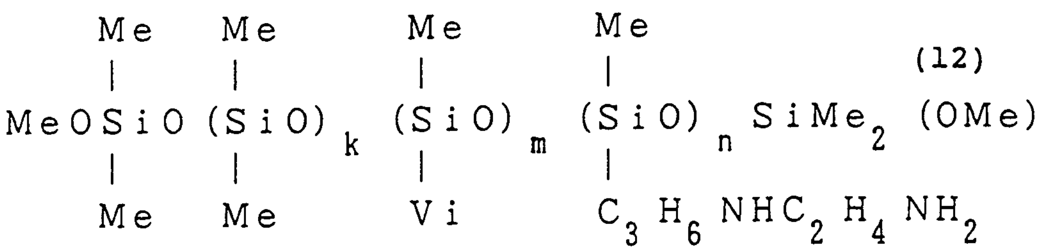

(12)

(amine equivalent: 3,000, vinyl equivalent: 3,000)

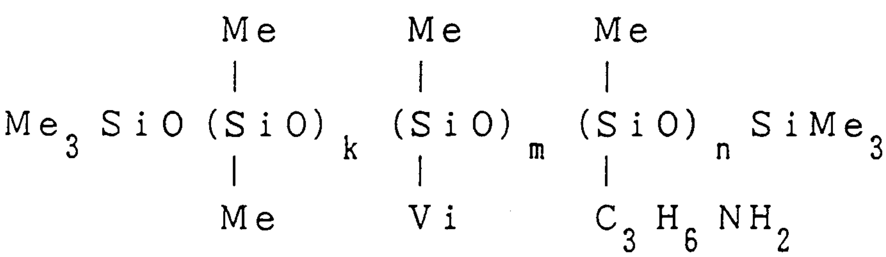

(13)

(amine equivalent: 10,000, vinyl equivalent: 15,000)

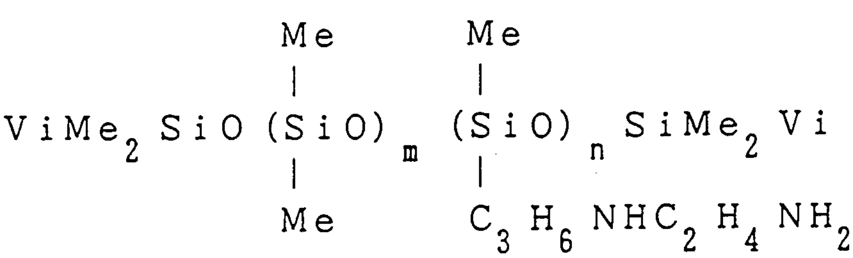

(14)

(amine equivalent: 3,000, vinyl equivalent: 6,000)

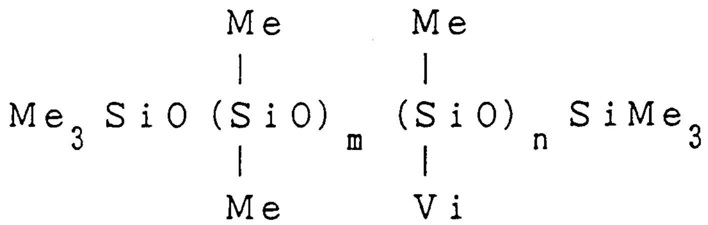

(15)

(vinyl equivalent: 10,000)

Organic peroxide 1 is dicumyl peroxide; organic peroxide 2 is $\alpha,\alpha'$-bis(t-butylperoxy)-p-diisopropylbenzene; TPBPCl is triphenylbenzylphosphonium chloride; and TBPCl is tetrabutylphosphonium chloride.

COMPARATIVE EXAMPLE 7

In accordance with the same composition as in Comparative Example 1, the fluororubber, the organic silicoine compound, the carbon and the organic peroxide were kneaded for 15 minutes at a temperature of not higher than 70 °C under cooling by means of a kneader, and the mixture was heated in a stationally state at 170 °C for 15 minutes. After cooling, the mixture was taken out and wound on a twin roll. Then, it was attempted to incorporate magnesium oxide, calcium hydroxide, bisphenol A and the organic onium compound, but due to gelation, it was impossible to uniformly add these materials and it was impossible to conduct vulcanization.

The vulcanizable fluororubber composition of the present invention has excellent properties of fluororubber and excellent low temperature characteristics of silicone and thus has a wide range of applications, and it can easily be produced. Thus, it is very useful from both industrial and economical viewpoints.

## Claims

**1.** A vulcanizable fluororubber composition comprising (A) a fluororubber having vinylidene fluoride units and being substantially not vulcanizable by peroxides and (B) an organopolysiloxane having a crosslinked structure formed by an organic peroxide and having amino groups, which form an interpenetrating network structure, wherein at least a part of the fluororubber (A) is chemically bonded to the polysiloxane (B) by a chemical bond between the vinylidene flouride units of the fluororubber (A) and the amino groups of the organopolysiloxane (B), and the fluororubber (A) is from 99.5 to 50 parts by weight and the organopolysiloxane (B) is from 0.5 to 50 parts by weight, based on 100 parts by weight of the total of the fluororubber (A) and the organopolysiloxane (B).

**2.** A fluororubber composition having a vulcanizing agent incorporated to the vulcanizable fluororubber composition of Claim 1.

**3.** The flurorubber composition according to Claim 2, wherein the vulcanizing agent is the one selected from the group consisting of polyhydroxy compounds and polyamine compounds.

**4.** A process for producing a vulcanizable fluororubber composition, which comprises reacting (A) a fluororubber having vinylidene fluoride units and being substantially not vulcanizable by a peroxide, (B) an organopolysiloxane having amino groups and (C) an organic peroxide at a temperature of at least the decomposition temperature of the organic peroxide (C) while exerting a shear stress.

**5.** The process according to Claim 4, wherein after reacting the flurorubber (A) and the organipolysiloxane (B), the organic peroxide (C) is added thereto, the temperature is raised to a level of at least the decomposition temperature of the organic peroxide (C).

**6.** A method for vulcanizing a vulcanizable fluororubber composition, which comprises reacting (A) a fluororubber having vinylidene fluoride units and being substantially not vulcanizable by a peroxide, (B) an organopolysiloxane having amino groups and (C) an organic peroxide at a temperature of at least the decomposition temperature of the organic peroxide (C) while exerting a shear stress to obtain a

vulcanizable fluororubber composition, then incorporating a vulcanizing agent thereto, and vulcanizing the mixture.

7. The vulcanizing method according to Claim 6, wherein the vulcanizing agent is incorporated at a temperature of not higher than the vulcanizing temperature of the component (A)

8. The vulcanizing method according to Claim 6, wherein the vulcanizing agent is the one selected from the group consisting of polyhydroxy compounds and polyamine compounds.

## Patentansprüche

1. Vulkanisierbare Fluorkautschukmasse, umfassend (A) einen Fluorkautschuk mit Vinylidenfluorid-Einheiten und im wesentlichen nicht vulkanisierbar durch Peroxide und (B) ein Organopolysiloxan mit vernetzter Struktur, gebildet durch ein organisches Peroxid, und mit Aminogruppen, die eine ineinanderdringende Netzwerkstruktur bilden, wobei mindestens ein Teil des Fluorkautschuks (A) chemisch an das Polysiloxan (B) durch eine chemische Bindung zwischen den Vinylidenfluorid-Einheiten des Fluorkautschuks (A) und den Aminogruppen des Organopolysiloxans (B) gebunden ist und der Fluorkautschuk (A) 99,5 bis 50 Gewichtsteile ausmacht und das Organopolysiloxan (B) 0,5 bis 50 Gewichtsteile ausmacht, bezogen auf 100 Gewichtsteile der Gesamtmenge an Fluorkautschuk (A) und Organopolysiloxan (B).

2. Fluorkautschukmasse mit einem Vulkanisationsmittel eingemischt in die vulkanisierbare Fluorkautschukmasse nach Anspruch 1.

3. Fluorkautschukmasse nach Anspruch 2, wobei das Vulkanisationsmittel ausgewählt ist aus der Gruppe, bestehend aus Polyhydroxy-Verbindungen und Polyamin-Verbindungen.

4. Verfahren zur Herstellung einer vulkanisierbaren Fluorkautschukmasse, umfassend Umsetzung von (A) Fluorkautschuk mit Vinylidenfluorid-Einheiten und im wesentlichen nicht vulkanisierbar durch ein Peroxid, (B) Organopolysiloxan mit Aminogruppen und (C) einem organischen Peroxid bei einer Temperatur von mindestens der Zersetzungstemperatur des organischen Peroxids (C), während Scherkräfte einwirken.

5. Verfahren nach Anspruch 4, wobei nach der Umsetzung von Fluorkautschuk (A) und Organopolysiloxan (B) das organische Peroxid (C) hinzugegeben wird, wobei die Temperatur auf ein Maß von mindestens der Zersetzungstemperatur des organischen Peroxids (C) angehoben wird.

6. Verfahren zur Vulkanisation einer vulkanisierbaren Fluorkautschukmasse, umfassend Umsetzung von (A) Fluorkautschuk mit Vinylidenfluorid-Einheiten und im wesentlichen nicht vulkanisierbar durch ein Peroxid, (B) Organopolysiloxan mit Aminogruppen und (C) einem organischen Peroxid bei einer Temperatur von mindestens der Zersetzungstemperatur des organischen Peroxids (C), während Scherkräfte einwirken unter Bereitstellung einer vulkanisierbaren Fluorkautschukmasse, anschließend Einmischen eines Vulkanisationsmittels dazu und Vulkanisieren des Gemisches.

7. Vulkanisationsverfahren nach Anspruch 6, wobei das Vulkanisationsmittel bei einer Temperatur von nicht mehr als die Vulkanisationstemperatur der Komponente (A) eingemischt wird.

8. Vulkanisationsverfahren nach Anspruch 6, wobei das Vulkanisationsmittel ausgewählt ist aus der Gruppe, bestehend aus Polyhydroxy-Verbindungen und Polyamin-Verbindungen.

## Revendications

1. Composition de caoutchouc fluoré vulcanisable comprenant :
   (A) un caoutchouc fluoré ayant des unités fluorure de vinylidène et étant pratiquement pas vulcanisable par des peroxydes ; et
   (B) un organopolysiloxane ayant une structure réticulée formée par un peroxyde organique et ayant des groupes amino,

   qui forment une structure à réseaux interpénétrés,

dans laquelle au moins une partie du caoutchouc fluoré (A) est chimiquement liée au polysiloxane (B) par une liaison chimique entre les unités de fluorure de vinylidène du caoutchouc fluoré (A) et les groupes amino de l'organopolysiloxane (B), et le caoutchouc fluoré (A) représente 99,5 à 50 parties en poids et l'organopolysiloxane (B) représente 0,5 à 50 parties en poids, sur la base de 100 parties en poids du total du caoutchouc fluoré (A) et de l'organopolysiloxane (B).

**2.** Composition de caoutchouc fluoré ayant un agent de vulcanisation incorporé à la composition de caoutchouc fluoré vulcanisable de la revendication 1.

**3.** Composition de caoutchouc fluoré selon la revendication 2, dans laquelle l'agent de vulcanisation est un agent de vulcanisation choisi dans le groupe constitué par les composés polyhydroxy et les composés polyamines.

**4.** Procédé de fabrication d'une composition de caoutchouc fluoré vulcanisable, qui comprend la réaction de (A) un caoutchouc fluoré ayant des unités de fluorure de vinylidène et pratiquement pas vulcanisable par un peroxyde, de (B) un organopolysiloxane ayant des groupes amino et de (C) un peroxyde organique, à une température d'au moins la température de décomposition du peroxyde organique (C), tout en exerçant une contrainte de cisaillement.

**5.** Procédé selon la revendication 4, dans lequel, après la réaction du caoutchouc fluoré (A) et de l'organopolysiloxane (B), le peroxyde organique (C) y est ajouté et la température est élevée jusqu'à un niveau d'au moins la température de décomposition du peroxyde organique (C).

**6.** Procédé de vulcanisation d'une composition de caoutchouc fluoré vulcanisable, qui comprend la réaction de (A) un caoutchouc fluoré ayant des unités de fluorure de vinylidène et pratiquement pas vulcanisable par un peroxyde, de (B) un organopolysiloxane ayant des groupes amino et de (C) un peroxyde organique, à une température d'au moins la température de décomposition du peroxyde organique (C), tout en exerçant une contrainte de cisaillement pour obtenir une composition de caoutchouc fluoré vulcanisable, puis l'incorporation d un agent de vulcanisation dans cette composition, et la vulcanisation du mélange.

**7.** Procédé de vulcanisation selon la revendication 6, dans lequel l'agent de vulcanisation est incorporé à une température non supérieure à la température de vulcanisation du composant (A).

**8.** Procédé de vulcanisation selon la revendication 6, dans lequel l'agent de vulcanisation est un agent de vulcanisation choisi dans le groupe constitué par les composés polyhydroxy et composés polyamines.